# EUROPÄISCHE PATENTANMELDUNG

(11) **EP 1 623 878 A1**
(43) Veröffentlichungstag der Anmeldung: **08.02.2006**
(21) Anmeldenummer: 05014415.3
(22) Anmeldetag: 02.07.2005
(51) Int. Cl.: B60R 13/02, B60Q 3/02, B60Q 1/32

(54) **Wohnwagen, Reisemobil oder dergleichen**

(30) Priorität: 07.08.2004 DE 202004012398 U
(71) Anmelder: Seitz GmbH & Co. KG, 74238 Krautheim (DE)
(72) Erfinder: Neubauer, Reinhard, 97084 Würzburg (DE)
(74) Vertreter: Kohler Schmid Möbus

(57) **Zusammenfassung**

Ein Wohnwagen, ein Reisemobil oder dergleichen besitzt einen Einstiegsbereich (1) an der zu seinem Innern hin gelegenen Seite einer Einstiegstür (3). Bodenseitig ist in dem Einstiegsbereich (1) ein Namensträger (6) vorgesehen mit einer Beschriftung (17), welche den oder die Eigentümer und/oder den oder die Besitzer und/oder den oder die Nutzer des Wohnwagens, des Reisemobils oder dergleichen oder wenigstens eine mit einer dieser Personen in Beziehung stehende Person bezeichnet.

## Beschreibung

Die Erfindung betrifft einen Wohnwagen, ein Reisemobil oder dergleichen mit einem Einstiegsbereich an der zu dem Innern des Wohnwagens, des Reisemobils oder dergleichen hin gelegenen Seite einer Einstiegstür.

Wohnwagen und Reisemobile erfreuen sich großer Beliebtheit insbesondere bei der Freizeitgestaltung. Beispielsweise für die Dauer eines Urlaubes stellen sie für ihre Nutzer ein zweites Zuhause dar.

Eine Individualisierung von Wohnwagen, Reisemobilen oder dergleichen der zurzeit gebräuchlichen Art hat sich die vorliegende Erfindung zum Ziel gesetzt.

Erfindungsgemäß gelöst wird diese Aufgabe durch die Merkmale von Anspruch 1. Im Falle der Erfindung ist demnach in dem bei geöffneter Einstiegstür zugänglichen Einstiegsbereich des Wohnwagens, Reisemobils oder dergleichen bodenseitig ein Namensträger vorgesehen mit einer Beschriftung, welche den oder die mit dem betreffenden Fahrzeug in besonderer Beziehung stehenden Personen bezeichnet. Aufgrund ihrer Anordnung im Einstiegsbereich kann die Beschriftung ihre individualisierende Wirkung schon beim Betreten des Fahrzeuges entfalten. Werden durch die Beschriftung die aktuellen Nutzer des Wohnwagens, Reisemobils oder dergleichen bezeichnet, so wird bei diesen das Gefühl, ihr Zuhause zu betreten, durch die erfindungsgemäße Beschriftung noch verstärkt. Als Beschriftung in Frage kommen Vor- und Zunamen oder Initialen der betreffenden Personen ebenso wie beispielsweise Kose- oder Spitznamen.

Besondere Ausführungsarten der Erfindung nach Anspruch 1 ergeben sich aus den abhängigen Ansprüchen 2 bis 14.

Gemäß Anspruch 2 ist die Beschriftung in bevorzugter Ausgestaltung der Erfindung austauschbar. Infolgedessen kann die im Einstiegsbereich des Wohnwagens, Reisemobils oder dergleichen angebrachte Beschriftung wechselnden Verhältnissen angepasst werden. Insbesondere denkbar ist ein Austauschen der Beschriftung bei einem Wechsel des Eigentümers oder Nutzers des betreffenden Fahrzeuges.

Eine gute Zugänglichkeit und auch eine einfache Austauschbarkeit der Beschriftung ist gewährleistet, wenn der Namensträger lösbar angebracht ist (Anspruch 3).

Insbesondere bei Dunkelheit erweist sich die in Anspruch 4 beschriebene Beleuchtbarkeit der Beschriftung als zweckmäßig. Zum einen kann die Beschriftung auch bei Dunkelheit individualisierend wirken; zum andern kann die Beleuchtung der Beschriftung gleichzeitig dazu dienen, den Einstiegsbereich des Wohnwagens, Reisemobils oder dergleichen bodenseitig zu beleuchten. Visuell besonders ansprechende und effektvolle Verhältnisse ergeben sich, wenn die Beschriftung, wie in Anspruch 5 angegeben, hinterleuchtbar ist.

Ausweislich Anspruch 6 ist die Beschriftung in weiterer Ausgestaltung der Erfindung mit einer durchsichtigen Abdeckung versehen. Eine derartige durchsichtige Abdeckung dient in erster Linie zum Schutz der Beschriftung gegen Beschädigung.

Gemäß Anspruch 7 wird die durchsichtige Abdeckung für die Beschriftung zweckmäßigerweise von dem Namensträger selbst gebildet. Der Namensträger übernimmt insoweit eine Doppelfunktion.

Eine fertigungstechnisch einfach umzusetzende Möglichkeit, eine durchsichtige Abdeckung für die Beschriftung gleichzeitig als Namensträger auszuführen, ergibt sich aus Anspruch 8, wonach der Namensträger eine durchsichtige Abdeckung für die Beschriftung bildet und an seiner Rückseite mit der Beschriftung versehen ist.

Anspruch 9 beschreibt mit Einätzen und Aufkleben beispielhaft Maßnahmen zum Anbringen von Beschriftungen an Namensträgern, die sich mit gängigen Techniken realisieren lassen.

Gemäß den Ansprüchen 10 bis 14 ist der Ort der Anbringung des erfindungsgemäßen Namensträgers mit Beschriftung variabel wählbar. In sämtlichen genannten Fällen sind für den Namensträger mit Beschriftung Anbringungsorte gewählt, die im Blickfeld derjenigen Personen liegen, welche den Wohnwagen, das Reisemobil oder dergleichen betreten. Auf diese Art und Weise ist sichergestellt, dass die Beschriftung die ihr zugedachte individualisierende Wirkung auch tatsächlich entfaltet. Wird der Namensträger mit Beschriftung in das ihn lagernde Konstruktionselement des Einstiegsbereichs eingelassen, so ergibt sich ein ansprechendes Erscheinungsbild der Gesamtanordnung. Zudem wird ein Überstand des Namensträgers vermieden, der für die ein- und aussteigenden Personen hinderlich sein könnte.

Nachstehend wird die Erfindung anhand beispielhafter schematischer Darstellungen näher erläutert. Es zeigen:
- Fig. 1: Den Einstiegsbereich eines Wohnwagens mit bodenseitigem Namensträger mit einer ersten Beschriftung und
- Fig. 2: die Anordnung gemäß Fig. 1 mit einer zweiten Beschriftung.

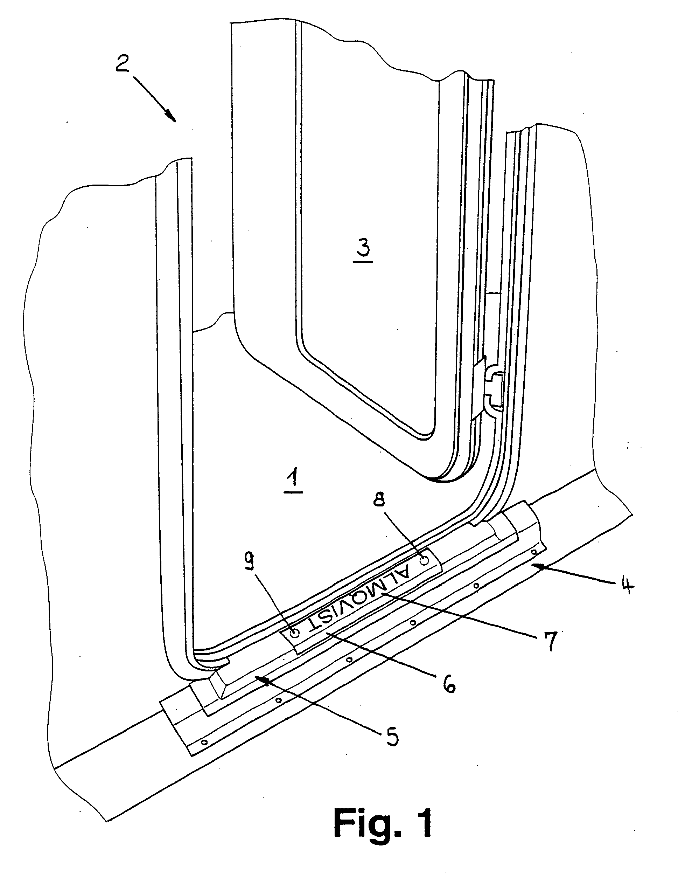

In Fig. 1 ist ein Einstiegsbereich 1 eines Wohnwagens 2 in der Ansicht vom Wohnwageninnern her dargestellt. Eine Einstiegstür in Form einer Wohnwagentür 3 ist geöffnet.

Im Bereich einer bodenseitigen Türschwelle 4 ist eine Trittleiste 5 angebracht. In diese ist ein Namensträger 6 mit einer Beschriftung 7 integriert. Bei dem Namensträger 6 handelt es sich um eine durchsichtige Leiste aus Acrylglas. An seiner von dem Betrachter abgewandten Rückseite ist der Namensträger 6 mit einer Folie beklebt, die nach dem Siebdruckverfahren mit der Beschriftung 7 versehen wurde. Der Namensträger 6 bildet gleichzeitig eine Abdeckung für die Beschriftung 7. Die Beschriftung 7 bezeichnet den Eigentümer des Wohnwagens 2. Befestigungsschrauben 8, 9 dienen zur lösbaren Fixierung des in die Trittleiste 5 eingelassenen Namensträgers 6.

Im Übrigen ist in die Türschwelle 4 eine nicht im Einzelnen gezeigte Beleuchtung integriert. Diese hinterleuchtet die Beschriftung 7 und beleuchtet gleichzeitig durch den durchsichtigen Namensträger 6 hindurch den gesamten bodenseitigen Teil des Einstiegsbereichs 1. Die genannte Beleuchtung ist unabhängig von der Innenraumbeleuchtung des Wohnwagens 2 schaltbar. Sie kann dementsprechend auch dann eingeschaltet werden, wenn die restliche Wohnwagenbeleuchtung ausgeschaltet ist. Im Dunkeln heimkehrenden Wohnwagenbewohnern erleichtert die beleuchtete Türschwelle 4 den Einstieg in den Wohnwagen 2. Gleichzeitig sorgt die Beleuchtung dafür, dass die Beschriftung 7 auch bei Dunkelheit ihre individualisierende Wirkung entfalten kann.

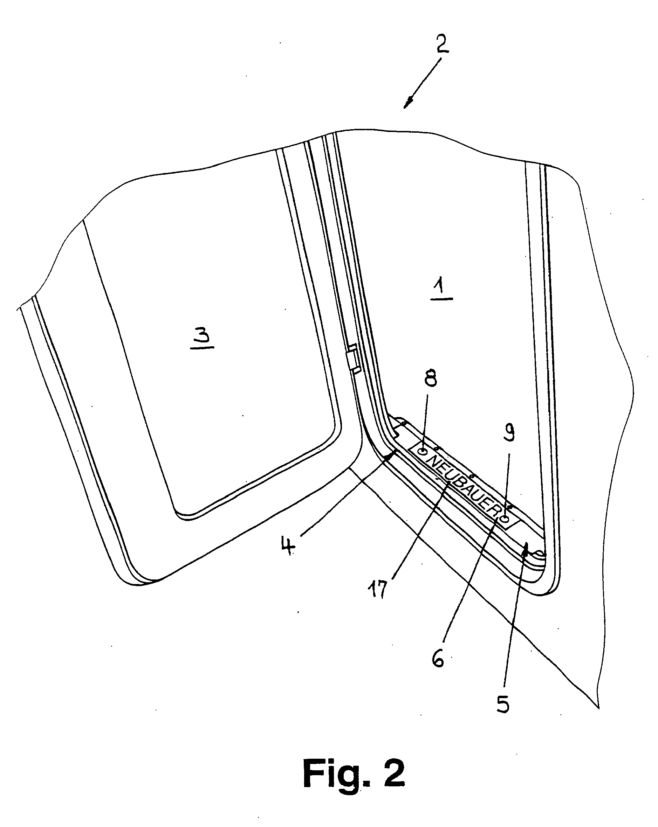

Die Anordnung gemäß Fig. 2 unterscheidet sich von der Anordnung nach Fig. 1 ausschließlich durch die Beschriftung des Namensträgers 6. Dabei zeigt Fig. 2 den Einstiegsbereich 1 des Wohnwagens 2 von der Wohnwagenaußenseite her. Die Beschriftung 7 gemäß Fig. 1 ist durch eine Beschriftung 17 ersetzt. Zu diesem Zweck waren zunächst die Befestigungsschrauben 8, 9 zu lösen. Anschließend konnte der Namensträger 6 aus der Trittleiste 5 der Türschwelle 4 entnommen werden. Die mit der Beschriftung 7 vorgesehene Folie an der Rückseite des Namensträgers 6 wurde entfernt und durch eine neue, mit der Beschriftung 17 bedruckte Folie ersetzt. Anschließend wurde der Namensträger 6 mit der Beschriftung 17 in die zugehörige Aufnahme an der Trittleiste 5 eingelassen und durch Anziehen der Befestigungsschrauben 8, 9 fixiert.

Fig. 2 zeigt den Einstiegsbereich 1 des Wohnwagens 2 aus der Perspektive von in den Wohnwagen 2 einsteigenden Personen. Der Namensträger 6 mit der Beschriftung 17 liegt ebenso im Blickfeld dieser Personen wie der gemäß Fig. 1 mit der Beschriftung 7 versehene Namensträger 6.

## Patentansprüche

1. Wohnwagen, Reisemobil oder dergleichen mit einem Einstiegsbereich (1) an der zu dem Innern des Wohnwagens, des Reisemobils oder dergleichen hin gelegenen Seite einer Einstiegstür (3), **dadurch gekennzeichnet, dass** in dem Einstiegsbereich (1) bodenseitig ein Namensträger (6) vorgesehen ist mit einer Beschriftung (7, 17), welche den oder die Eigentümer und/oder den oder die Besitzer und/oder den oder die Nutzer des Wohnwagens, des Reisemobils oder dergleichen oder wenigstens eine mit einer dieser Personen in Beziehung stehende Person bezeichnet.

2. Wohnwagen, Reisemobil oder dergleichen nach Anspruch 1, **dadurch gekennzeichnet, dass** die Beschriftung (7, 17) austauschbar ist.

3. Wohnwagen, Reisemobil oder dergleichen nach einem der vorhergehenden Ansprüche, **dadurch gekennzeichnet, dass** der Namensträger (6) lösbar angebracht ist.

4. Wohnwagen, Reisemobil oder dergleichen nach einem der vorhergehenden Ansprüche, **dadurch gekennzeichnet, dass** die Beschriftung (7, 17) beleuchtbar ist.

5. Wohnwagen, Reisemobil oder dergleichen nach einem der vorhergehenden Ansprüche, **dadurch gekennzeichnet, dass** die Beschriftung (7, 17) hinterleuchtbar ist.

6. Wohnwagen, Reisemobil oder dergleichen nach einem der vorhergehenden Ansprüche, **dadurch gekennzeichnet, dass** die Beschriftung (7, 17) mit einer durchsichtigen Abdeckung versehen ist.

7. Wohnwagen, Reisemobil oder dergleichen nach einem der vorhergehenden Ansprüche, **dadurch gekennzeichnet, dass** der Namensträger (6) eine durchsichtige Abdeckung für die Beschriftung (7, 17) bildet.

8. Wohnwagen, Reisemobil oder dergleichen nach einem der vorhergehenden Ansprüche, **dadurch gekennzeichnet, dass** der Namensträger (6) eine durchsichtige Abdeckung für die Beschriftung (7, 17) bildet und an der von dem Betrachter abgewandten Rückseite mit der Beschriftung (7, 17) versehen ist.

9. Wohnwagen, Reisemobil oder dergleichen nach einem der vorhergehenden Ansprüche, **dadurch gekennzeichnet, dass** die Beschriftung (7, 17) in den Namensträger (6) eingeätzt oder auf den Namensträger (6) aufgeklebt ist.

10. Wohnwagen, Reisemobil oder dergleichen nach einem der vorhergehenden Ansprüche, **dadurch gekennzeichnet, dass** der Namensträger (6) mit der Beschriftung (7, 17) an einer Türschwelle (4) der Einstiegstür (3) angeordnet, vorzugsweise in die Türschwelle (4) eingelassen ist.

11. Wohnwagen, Reisemobil oder dergleichen nach einem der vorhergehenden Ansprüche, **dadurch gekennzeichnet, dass** der Namensträger (6) mit der Beschriftung (7, 17) an einer Trittleiste (5) der Einstiegstür (3) angeordnet, vorzugsweise in die Trittleiste (5) der Einstiegstür (3) eingelassen ist.

12. Wohnwagen, Reisemobil oder dergleichen nach einem der vorhergehenden Ansprüche, **dadurch gekennzeichnet, dass** der Namensträger (6) von einer Trittleiste (5) der Einstiegstür (3) gebildet ist.

13. Wohnwagen, Reisemobil oder dergleichen nach einem der vorhergehenden Ansprüche, **dadurch gekennzeichnet, dass** der Namensträger (6) mit der Beschriftung (7, 17) an einer Einstiegsstufe angeordnet, vorzugsweise in die Einstiegsstufe eingelassen ist.

14. Wohnwagen, Reisemobil oder dergleichen nach einem der vorhergehenden Ansprüche, **dadurch gekennzeichnet, dass** der Namensträger (6) mit der Beschriftung (7, 17) an einer Trittstufe einer Einstiegsstufe angeordnet, vorzugsweise in die Trittstufe eingelassen ist.
